# FASCICULE DE BREVET EUROPEEN

(11) **EP 1 836 269 B1**
(45) Date de publication et mention de la délivrance du brevet: **21.09.2011**
(21) Numéro de dépôt: 05825989.6
(22) Date de dépôt: 13.12.2005
(51) Int. Cl.: C09J 123/08

(54) **COMPOSITION ADHESIVE A BASE DE COPOLYMERES ETHYLENIQUES, UTILISABLE POUR EXTRUSION-COUCHAGE ET EXTRUSION-LAMINATION SUR DIVERS SUPPORTS**
AUF ETHYLENCOPOLYMERISATEN BASIERENDE KLEBSTOFFE ZUR EXTRUSIONSMÄSSIGEN KASCHIERUNG UND LAMINIERUNG VERSCHIEDENSTER SUBSTRATE
ADHESIVE COMPOSITION BASED ON ETHYLENE COPOLYMERS, USEFUL FOR EXTRUSION-COATING AND EXTRUSION-LAMINATION ON A VARIETY OF SUPPORTS

(30) Priorité: 16.12.2004 FR 0413384
(43) Date de publication de la demande: 26.09.2007
(73) Titulaire: ARKEMA FRANCE, 92700 Colombes (FR)
(72) Inventeur: PASCAL, Jérôme, F-27410 Grandchain (FR); CHOPINEZ, Fabrice, F-27000 Evreux (FR); RAULINE, Damien, F-27270 Saint-Quentin-des-Isles (FR)
(74) Mandataire: Delprat, Corinne
(86) Numéro de dépôt international: PCT/FR2005/003110
(87) Numéro de publication internationale: WO 2006/064117

(56) Documents cités:
- WO-A-2004/076507
- DE-A1- 10 020 651
- ANONYMOUS: "Lotader maleic anhydride (MAH)" INTERNET ARTICLE, [Online] 27 juin 2004 (2004-06-27), XP002339265 Extrait de l'Internet: URL:http://www.arkemainc.com/pdf/techpoly/ lotadermah_grades.pdf>
- ANONYNOUS: "Lotader resins" INTERNET ARTICLE, [Online] XP002339266 Extrait de l'Internet: URL:http://www.arkemainc.com/index.cfm?pag =112>

## Description

La présente invention se rapporte à une composition adhésive ou liant à base de un ou plusieurs polymères ou copolymères éthylèniques, utilisable dans un procédé d'extrusion-couchage pour application sur un support ou dans un procédé d'extrusion- lamination pour coller entre eux plusieurs supports pouvant être de nature différente ou pas, l'un de ces supports pouvant être en particulier l'aluminium.

Il est connu d'utiliser comme liant d'extrusion-couchage sur un support en aluminium, des copolymères d'éthylène et d'acide (méth)acrylique; toutefois ces copolymères n'adhèrent que sur un nombre limité de supports, et en particulier n'adhèrent pas sur des films plastiques orientés tels que le polyester (OPET), le polypropylène(OPP), ou le polyamide(OPA).

Le document FR 98 13248 décrit un liant du type terpolymère éthylène/(méth)acrylate d'alkyle/ méthacrylate de glycidyle(GMA) pour coller un film polyester tel que le poly(éthylène téréphtalate) (PET) traité Corona sur un autre substrat tel que polyéthylène(PE) ; toutefois, la polyvalence pour coller sur d'autres substrats est limitée.

Le document EP 444 865 décrit des liants du type scellable-pelable pour couvercles en aluminium d'emballage plastique, dont les compositions comprennent en mélange des copolymère d'éthylène et d'acétate de vinyle (EVA) ou d'éthylène et de (méth)acrylates d'alkyle, avec des terpolymères d'éthylène, d'acide insaturé ou de son anhydride et d'ester insaturé. Ces liants qui doivent être scellables et pelables ne sont pas utilisés comme liants d'extrusion-couchage et d'extrusion-lamination entre un support aluminium et un support thermoplastique.

Le document EP 1 136 536 décrit un liant de coextrusion comprenant :
- 5 à 35 parties d'un polymère (A) lui-même constitué d'un mélange de 80 à 20 parties d'un polyéthylène métallocène (A1) et de 20 à 80 parties d'un polyéthylène LLDPE (A2) non métallocène, le mélange (A1) + (A2) étant cogreffé par un acide carboxylique insaturé,
- 95 à 65 parties d'un polyéthylène (B) choisi parmi les polyéthylènes homo ou copolyméres et les élastomères,
le mélange de (A) et (B) étant tel que la teneur en acide carboxylique insaturé greffé est comprise entre 30 et 100 000 ppm.

Ces compositions, très efficaces en coextrusion, sont peu performantes dans les technologies d'extrusion- couchage et extrusion-lamination, sur certains supports tels que le poly(éthyléne téréphtalate) orienté(OPET).

Le document EP 222 789 décrit une composition thermoplastique constituée d'un mélange d'un polymère ou copolymère à base d'éthylène et d'un terpolymère éthylène/(méth)acrylate d'alkyle/anhydride maléique; dans les exemples décrivant l'utilisation de cette composition en enduction sur un support en aluminium, le terpolymère est utilisé en mélange avec 15 à 50% en poids d'un polyéthylène radicalaire, ce qui donne des teneurs en anhydride maléique comprises entre 14 et 2.5% en poids. Ce type de composition, du fait de sa teneur élevée en anhydride maléique, est très sensible a l'humidité et en outre ses propriétés d'adhésion sur des films en OPET, OPA et OPP sont médiocres.

Le document US 2002/0198323 A1 décrit une mélange polymérique utilisé pour l'enduction à grande vitesse d'un substrat polaire tel qu'une feuille d'aluminium, comprenant du polyéthylène basse densité (LDPE) (au moins 55% en poids) et un copolymère à faible acidité qui est un copolymère d'éthylène et d'acide (méth)acrylique, pouvant contenir de 0 à 20 % en poids d'un autre comonomère éthylèniquement insaturé. De préférence ce copolymére à faible acidité est un terpolymère éthylène/acide (méth)acrylique/acrylale d'isobutyle, ayant une teneur en ce dernier comonomère comprise entre 1 et 8% en poids du terpolymère, soit au plus 3.6% dans le mélange. Ce type de formulation n'adhère que sur un nombre limité de supports tels que l'aluminium, le papier et le polyéthylène.

Le document WO 2004/076507 décrit à la revendication 8 une composition comprenant :
■ un initiateur de radicaux libres réticulant,
■ un agent gonflant,
■ une résine réticulable comprenant :
   - un copolymère éthylène-monomère insaturé dont au moins est choisi parmi les copolymères éthylène-acide acrylique, éthylène-acide méthacrylique et éthylène-acide acrylique-acide méthacrylique,
   - un élément choisi parmi un terpolymère contenant des unités acrylate et/ou méthacrylate, un élastomère greffé anhydride maléique, un polymère éthylène-acrylate-anhydride maléique, un polymère éthylène-acétate de vinyle-anhydride maléique; un copolymère éthylène-acétate de vinyle, un copolymères éthylène-ester méthylacrylique, un copolymère éthylène-ester éthylacrylique, un copolymère éthylène-ester butylacrylique et un caoutchouc.

Le document EP 1702955, uniquement opposable à la nouveauté de l'invention selon l'Article 54(3)CBE, décrit à l'exemple comparatif 15 une composition adhésive sensible à la pression comprenant :
● 30% d'un copolymère obtenu par polymérisation d'acide acrylique, d'acrylate de 2-éthlhexyle, d'acrylate d'hydroxyéthyle et de N-vinyl-2-pyrrolidone ;
● 70% d'un soldant constitué d'acétate d'éthyle.

La demanderesse a trouvé, qu'il était possible, de façon surprenante, d'améliorer de façon importante les propriétés d'adhésion d'une composition adhésive ou liant, constituée d'au moins un polymère ou copolymère éthylènique, appliquée sur un support par un procédé d'extrusion-couchage ou pour coller entre eux des supports de nature différente et variée, par un procédé d'extrusion-lamination, en combinant à la fois une faible teneur en fonction réactive, qui est de type acide, anhydrides, ou époxyde, dans une matrice oléfinique, et une teneur suffisante en comonoméres d'ester d'acides carboxyliques insaturés.

Les avantages d'une telle composition sont, outre la polyvalence de l'adhésion en fonction des supports, la possibilité d'utilisation dans une large gamme de température entre 220 et 330°C et à des vitesses élevées de mise en oeuvre, l'insensibilité à la reprise d'humidité ainsi que le taux réduit d'odeur émise, tant lors de son utilisation que sur les produits finis.

La présente invention concerne

De préférence, la teneur en fonction(s) réactive(s) est comprise entre 0.05% et 0.9% en poids par rapport à la composition.

Le terme copolymère éthylènique tel qu'utilisé dans la présente description se rapporte à des polymères d'éthylène et d'un ou plusieurs comonomères, tels que des monomères insaturés en particulier:
- des alpha -oléfines ayant 3 à 30 atomes de carbone,
- des composés acétyléniques.
- des diènes conjugués ou non-conjugués, tels que par exemple le 1,4-hexadiéne,
- des polyènes,
- du monoxyde de carbone;
- des esters d'acides carboxyliques insaturés tels que par exemple les (meth)acrylates d'alkyle, les alkyles pouvant avoir jusqu'à 24 atomes de carbone,
- des esters vinyliques d'acides carboxyliques saturés tels que par exemple l'acétate ou le propionote de vinyle,
- des époxydes insaturés,
- des acides carboxyliques insaturés; leurs sels, leurs anhydrides.

< -- > composition adhésive à base d'un ou plusieurs polymères ou copolymères éthyléniques, cette composition comprenant au moins un comonomère de type ester d'acides carboxyliques insaturés et au moins un comonomère fonctionnel, dans laquelle
● au moins un comonomère de type ester d'acides carboxyliques insaturés est choisi parmi les (méth)acrytates d'alkyle, le groupe alkyle comprenant de 1 à 24 atomes de carbone,
● la teneur en comonomère de type (méth)acrylate d'alkyle est comprise entre 6 et 25 % en poids de la composition, et
● le comonomère fonctionnel est constitué d'au moins une fonction réactive sous forme d'un groupe acide, anhydride ou époxyde dont le taux est inférieur à 1% en poids de la composition.

Des exemples d'anhydrides d'acide dicarboxylique insaturé sont notamment l'anhydride maléique, l'anhydride itaconique, l'anhydride citraconique, l'anhydride tétrahydrophtalique.

Le ou les copolymères éthyléniques de la composition selon l'invention peuvent être dilués dans un homopolymère ou un copolymère du polyéthylène, tel que notamment du polyéthylène basse densité, du polyéthylène linéaire basse densité, du polyéthylène très basse densité, ou du polyéthylène métallocène, ce qui devrait conduire à une diminution des caractéristiques adhésives des compositions ainsi obtenues: cependant, ces caractéristiques adhésives peuvent rester suffisantes pour te couchage ou la lamination sur certains supports envisagés.

Des exemples d'acrylate ou méthacrylate d'alkyle sont notamment l'acrylate de méthyle, l'acrylate d'éthyle, l'acrylate de n-bolyle, l'acrylate d'isobutyle, l'acrylate de 2-éthylhexyle.

On utilise en particulier l'acrylate de méthyle et l'acrylate de n-butyle.

De préférence, la composition adhésive est caractérisée en ce que le comonomère fonctionnel est choisi parmi les groupes acide, anhydride ou époxyde.

De préférence, le groupe est choisi parmi les composés d'acides carboxyliques ou de leurs dérivés anhydride d'acides carboxyliques insaturés.

Des exemples d'anhydrides d'acide dicarboxylique insaturé sont notamment l'anhydride maléique, l'anhydride itaconique, l'anhydride citraconique, l'anhydride tétrahydrophtalique. De préférence, c'est l'anhydride maléique qui est utilisée.

Toutefois, le comonomère fonctionnel peut comprendre une fonction du type époxyde insaturé.

Des exemples d'époxydes insaturés sont notamment :
- les esters et éthers de glycidyle aliphatiques tels que l'allylglycidyléther, le vinylglycidyléther, le maléate et l'itaconate de glycidyle, l'acrylate et le méthacrylate de glycidyle(GMA) et
- les esters et éthers de glycidyle alicycliques tels que le 2-cyclohexène-1-glycidyléther, le cyclohexène-4,5-diglycidylcarboxylate, le cyclohexène-4-glycidyl carboxylate, le 5-norbomène-2-méthyl-2-glycidyl carboxylate et l'endocis-bicyclo(2,2,1)-5-heptène-2,3-diglycidyl dicarboxylate.

Des fonctions de type acide mono ou dicarboxylique insaturé tel que l'acide (méth)acrylique peuvent aussi être utilisées.

Ces comonomères fonctionnels sont de préférence fixés par copolymérisation, notamment de type radicalaire haute pression, aux polymères ou copolymères éthylèniques précédents, mais toutefois ils peuvent aussi l'être par greffage.

Toutefois, ces comonomères fonctionnels peuvent être copolymérisés directement avec de l'éthylène ou d'autres comonomères éthyléniques, notamment par polymérisation radicalaire haute pression, ou greffés à des polymères éthyléniques.

De préférence, le comonomère fonctionnel est choisi parmi les anhydrides d'acides carboxyliques insaturés, et de préférence est l'anhydride maléique.

En particulier, la composition adhésive est caractérisée en ce que la teneur en anhydride maléique est comprise entre 0.15 et 0,6% en poids de la composition..

De préférence, cette composition adhésive, est caractérisée en ce que la teneur en comonomère de (méth)acrylate d'alkyle est comprise entre 10 et 25% en poids dans la composition.

Selon un autre mode de réalisation, l'invention concerne une structure multicouches obtenue par utilisation de la composition adhésive telle que décrite précédemment. dans un procédé d'extrusion-couchage pour application sur un support, ledit support étant choisi parmi l'aluminium, le papier ou carton, la cellophane, les films à base de résines polyéthylène, polypropylène; polyamide, polyester, chlorure de polyvinyle(PVC), chlorure de polyvinylidène(PVDC), polyacrylonitryle (PAN), ces films étant orientés ou non, métallisées ou non, traités ou non par voie physique ou chimique, et les films revêtus d'une fine couche barrière inorganique tels que le polyester(PET SiOx ou AlOx).

Selon un autre mode de réalisation, l'invention concerne une structure multicouches obtenue par utilisation de la composition adhésive de l'invention, dans un procédé d'extrusion-lamination pour coller entre eux plusieurs supports de nature différente, caractérisée en ce que ces supports sont choisis parmi l'aluminium, le papier ou carton, la cellophane, les films à base de résines Polyéthylène, polypropyléne, polyamide, polyester, chlorure de polyvinyle(PVC), chlorure de polyvinylidène(PVDC), polyacrylonitryle (PAN), ces films étant orientés ou non, métallisés ou non, traités ou non par voie physique ou chimique, et les films revêtus d'une fine couche barrière inorganique, tels que le polyester (PET SiOx ou AlOx).

En outre, l'invention concerne également un procédé d'obtention de la composition adhésive de l'invention, consistant en la polymérisation radicalaire haute pression en une seule étape de tous les comonomères

L'invention concerne aussi un autre procédé d'obtention de la composition adhésive selon l'invention, dans lequel on mélange à l'état fondu au moins deux copolymères éthylèniques obtenus séparément par polymérisation radicalaire haute pression, dont l'un au moins comporte le comonomère fonctionnel.

Dans ce cas, il importe peu que ce mélange ait été fait préalablement à l'étape d'extrusion-couchage/ lamination, ou lors de cette étape par mélange à sec de granulés de composés différents comprenant les différents comonomères.

La composition adhésive de l'invention peut contenir en outre d'autres additifs, tels que des agents anti-bloquants, glissants, anti-oxydants, des charges, des pigments, des colorants et des agents dits « processing aid», pour faciliter la mise en oeuvre de cette composition en extrusion-couchage ou extrusion-lamination. Certains de ces additifs peuvent être introduits dans la composition sous forme de mélanges-maîtres.

### EXEMPLES DE RÉALISATION :

### Conditions générales :

Des adhésifs de compositions différentes (dont les caractéristiques sont précisées dans le tableau 1) ont été coextrudés avec une couche de Polyéthylène de basse densité radicalaire (PEBDr) et couchés sur différents supports à l'aide d'une ligne d'extrusion-couchage COLLIN . Les conditions de mise en oeuvre ont été choisies de manière à imposer un taux d'étirage (rapport de la vitesse de tirage sur la vitesse du polymère fondu en sortie de filière) de 5,8.

On notera que dans les structures composites obtenues décrites dans les exemples suivants, la couche de polyéthylène peut être totalement formée par extrusion ou partiellement par lamination sur un film en polyéthylène.

Des bandelettes de 15 mm de large ont été découpées au centre de la laize et suivant le sens d'extrusion. Le revêtement polymère a été séparé manuellement du support sur une distance de quelques centimètres, puis les deux bras ainsi dégagés (respectivement aluminium et revêtement polymère) ont ensuite été placés chacun dans une des deux mâchoires d'une machine de traction Synergie 200 de MTS. La résistance au pelage a ensuite été évaluée avec une vitesse de pelage de 200 mm/min. 5 éprouvettes ont été testées par référence d'adhésif. Les tests ont été réalisés dans les 15 minutes suivant la mise en oeuvre (pelage à to), et également après un conditionnement d'un mois à 23°C et 50% d'humidité relative.

**Tableau 1**

| **Référence Adhésif** | **% (poids) Acrylate** | **% (poids) MAH** | **% (poids) AMA** | **% (poids) GMA** | **MFI (2,16Kg @ 190°C)** |
|---|---|---|---|---|---|
| PEBD | - | - | - | - | 4,1 |
| Résine 1 | 6,2 (ABu) | 3,1 | - | - | 5,5 |
| Résine 2 | 18,2 (AMe/ABu) | 0,29 | - | - | 9,9 |
| Résine 3 | 13,6 (AMe) | 0,32 | - | - | 8,3 |
| Résine 4 | 17,7 (ABu) | 2,9 | - | - | 5,8 |
| Résine 5 | 18,2 (AMe) | 0,29 | - | - | 7,7 |
| Résine 6 | 21,3 (AMe) | 0,3 | - | - | 8,5 |
| Résine 7 | 15.8 (AMe/ABu) | - | 0.45 | - | 8.9 |
| Résine 8 | 24.1 (AMe) | - | - | 0.8 | 6.9 |

Le polyéthylène basse densité(PEBD) est le Lacqtene^{®} LD 304 de TOTAL Petrochemicals.

La résine 1 est le terpolymère éthylène/acrylate de butyle/anhydride malëique (MAH) commercialisé sous la marque Lotader^{®} 3210 par ARKEMA.

La résine 4 est le terpolymère éthylène/acrylate de butyle/anhydride maléïque (MAH) commercialisé sous la marque Lotader^{®} 3410 par ARKEMA.

Les résines 2, 3, 5 à 8 sont des compositions selon l'invention.

La résine 2 est obtenue par mélange sur une extrudeuse monovis de type FAIREX 45/26 D, vitesse de rotation de 50 tours/mn, à une température de 150°C, d'un copolymère éthylène/acrylate de butyle, contenant 18.6% en poids d'acrylate, et d'un terpolymère éthylène/acrylate de méthyle (17.7%poids)/anhydride malëique(1% poids), dans un rapport en poids d'environ 70/30.

Les résines 3, 5 et 6 sont des terpolymères éthylène/acrylate de méthyle/anhydride maléique obtenus par polymérisation radicalaire haute pression.

La résine 7 est obtenue par mélange sur une extrudeuse comme pour la résine 2, d'un copolymère éthylène/acrylate de méthyle, contenant 20% en poids d'acrylate, et d'un terpolymère éthylène/acrylate de butyle (6% poids) /acide méthacrylique(1.5% poids), dans un rapport en poids d'environ 70/30.

La résine 8 est obtenue par mélange sur une extrudeuse comme pour la résine précédente, d'un copolymère éthylène/acrylate de méthyle, contenant 24% en poids d'acrylate, et d'un terpolymère éthylène/acrylate de méthyle (25% poids) / méthacrylate de glycidyle (8% poids), (commercialisé sous la marque Lotader^{®} AX 8900 par ARKEMA), dans un rapport en poids d'environ 90/10.

Les abréviations AMe, ABu, MAH, AMA et GMA désignent respectivement l'acrylate de Méthyle, l'acrylate de Butyle, l'anhydride maléique, l'acide méthacrylique et le méthacrylate de glycidyle.

Le MFI (« melt flow index ») est l'indice de fluidité à l'état fondu, mesuré à la température de 190°C sous une pression de 2.16 kg (selon norme ASTM D 1238).

### EXEMPLE 1 :

Le support employé est un film d'aluminium de 37µm d'épaisseur. La structure réalisée est: Aluminium (37µm)/ adhésif (10µm/ PEBDr. (100µm). Deux températures d'extrusion (respectivement 290-300°C et 310-320°C) ont été évaluées pour chacun des adhésifs testés(dont ceux servant de comparatif).

Les résultats obtenus sont regroupés dans le tableau 2 ci-dessous (les valeurs mesurées sont suivies de l'écart-type) :

**Tableau 2**

| **Référence de l'adhésif** | **Force de pelage à t₀ (N/15mm)** | | | **Force de pelage à 1 mois (N/15mm)** | | |
|---|---|---|---|---|---|---|
| **Température matière : 290-300°C** | | | | | | |
| Résine 1 (comparatif) | **2,9** | **+/-** | 0,1 | **2,5** | **+/**- | 0,1 |
| Résine 2 | **3,9** | **+/-** | 0,3 | **4,2** | **+/-** | 0,2 |
| Résine 3 | **3,7** | **+/-** | 0,1 | **3,7** | **+/-** | 0,1 |
| Résine 4 (comparatif) | **3,8** | **+/-** | 0,1 | **3,5** | **+/-** | 0,1 |
| PEBD (comparatif) | **1** | **+/-** | 0,05 | **0,18** | **+/-** | 0,05 |
| 80% résine 1 dans PEBD | | **+/** | | | **+/** | |
| (comparatif) | **2,2** | | 0,1 | **2,1** | | 0,05 |
| 20% résine 1 dans PEBD | | **+/** | | | **+/** | |
| (comparatif) | **1,6** | | 0,1 | **0,8** | | 0,05 |

| **Température matière : 310-320 °C** | | | | | | |
|---|---|---|---|---|---|---|
| Résine 1 (comparatif) | **3,3** | **+/-** | 0,1 | **3,1** | **+/-** | 0,0 |
| Résine 2 | **5,7** | **+/-** | 0,1 | **5,9** | **+/-** | 0,0 |
| Résine 3 | **5,4** | **+/-** | 0,1 | **5,0** | **+/-** | 0,0 |
| Résine 7 | **5.0** | **+/-** | 0.1 | **5.2** | **+/-** | 0.0 |
| Résine 4 (comparatif) | **5,0** | **+/-** | 0,1 | **4,4** | **+/-** | 0,1 |
| PEBD (comparatif) | **1,3** | **+/-** | 0,1 | **0,8** | **+/-** | 0,1 |
| 80% résine 1 dans PEBD | | **+/** | | | **+/** | |
| (comparatif) | **2,9** | | 0,1 | **2,8** | | 0,1 |
| 20% résine 1 dans PEBD | | **+/** | | | **+/** | |
| (comparatif) | 1,9 | | 0,1 | **1,8** | | 0,1 |

On constate en particulier les caractéristiques améliorées d'adhésion des compositions selon l'invention (résines 2, 3 et 7), notamment après vieillissement, par rapport aux adhésifs usuels utilisés en extrusion(résines 1 et 4, essais comparatifs).

En outre, le mélange de la résine 1 avec du PEBD, selon l'enseignement des exemples 9 à 13 du brevet EP 222 789, cité comme art antérieur, donne des valeurs d'adhésion encore plus faibles, qu'avec la résine 1 utilisée seule.

### EXEMPLE 2 :

Pour cet exemple, deux supports en poly(éthylène téréphtalate) orienté (OPET) de référence MYLAR 813 (14µ d'épaisseur) et MYLAR 800 (12µm) de Du Pont Teijin sont utilisés.

Dans le cas du MYLAR 813, l'adhésif a été déposé sur la face du film non traitée par voie physique ou chimique(par un « primaire »), et dans les deux cas un traitement Corona a été appliqué en ligne sur le film PET juste avant le dépôt de l'adhésif.

La structure réalisée est : Film PET / adhésif (10µm)/ PEBDr. (30µm). Les résultats obtenus sont regroupés dans le tableau 3 ci-dessous :

**Tableau 3**

| **Référence de l'adhésif** | **nature du support** | **Température matière moyenne (°C)** | **Force de pelage à t₀ (N/15mm)** | | | **Force de pelage à 1 mois (N/15mm)** | | |
|---|---|---|---|---|---|---|---|---|
| Résine 1 (comparatif) | MYLAR 813 - épaisseur 14µm | 310 | **0,6** | +/- | 0 | **2,5** | +/- | 0,5 |
| Résine 4 (comparatif) | | 310 | **2,8** | +/- | 0 | **4,7** | +/- | 0,2 |
| Résine 5 | | 310 | **4,8** | +/- | 0,5 | **6** | +/- | 0,2 |
| Résine 6 | | 310 | **5,2** | +/- | 0,2 | **6,1** | +/- | 0,3 |
| Résine 6 | MYLAR 800-épaisseur 12µm | 290 | **2,4** | +/- | 0,1 | **4,6** | +/- | 0,1 |
| Résine 6 | | 300 | **2,5** | +/- | 0,1 | **4,8** | +/- | 0,3 |
| Résine 6 | | 310 | **3,9** | +/- | 0,3 | 5,2 | +/- | 0,2 |
| Résine 7 | | 310 | **3.2** | +/- | 0.1 | **5.0** | +/- | 0.2 |
| Résine 8 | | 310 | **5,1** | +/- | 0.1 | **5.8** | +/- | 0.2 |
| Résine 6 | | 320 | **4,8** | +/- | 0,2 | **4,7** | +/- | 0,1 |

On constate les caractéristiques fortement améliorées d'adhésion des compositions selon l'invention (résines 5, 6, 7 et 8) par rapport aux résines comparatives 1 et 4.

### EXEMPLE 3 :

Dans cet exemple, les adhésifs ont été déposés sur un film de Polyamide 6 orienté de 25µm d'épaisseur. La structure des échantillons est la suivante : Film oPA / adhésif [10µm)/ PEBDr. (85µm). Les résultats obtenus sont regroupés dans le tableau 4 ci-dessous :

**Tableau 4:**

| **Référence de l'adhésif** | **Force de pelage à t0 (N/15mm)** | | | **Force de pelage à 1 mois (N/15mm)** | | |
|---|---|---|---|---|---|---|
| **Température matière : 310-320°C** | | | | | | |
| Résine 1 | **1,7** | **+/-** | 0,2 | **4,7** | **+/-** | 0,1 |
| Résine 2 | **3,7** | **+/-** | 0,1 | **5,5** | **+/-** | 0,1 |
| Résine 4 | **4,1** | **+/-** | 0,1 | **7,4** | **+/-** | 0,2 |
| Résine 6 | **5,8** | **+/-** | 0,2 | **7,5** | **+/-** | 0,1 |

La résine 6 selon l'invention présente aussi des caractéristiques améliorées d'adhésion sur ce type de substrat en polyamide orienté.

Dans tous les essais, on a aussi constaté une forte réduction des odeurs émises lors de la mise en oeuvre des résines selon l'invention, et sur les produits finis, par rapport aux résines conventionnelles.

En outre, les résines de l'invention sous forme de granulés, présentent une insensibilité remarquable à l'humidité.

## Revendications

1. Composition adhésive à base d'un ou plusieurs copolymères éthyléniques, les copolymères éthyléniques étant des polymères d'éthylène et d'un ou plusieurs comonomères, cette composition comprenant au moins un comonomère de type ester d'acides carboxyliques insaturés et au moins un comonomère fonctionnel, **caractérisée en ce que** :
- au moins un comonomère de type ester d'acides carboxyliques insaturés est choisi parmi les (méth)acrylates d'alkyle, le groupe alkyle comprenant de 1 à 24 atomes de carbone,
- la teneur en comonomère de type (méth)acrylate d'alkyle est comprise entre 6 et 25 % en poids de la composition, et
- le comonomère fonctionnel est constitué d'au moins une fonction réactive sous forme d'un groupe acide, anhydride ou époxyde dont le taux est inférieur à 1 % en poids de la composition.

2. Composition adhésive selon la revendication 1, **caractérisée en ce que** la teneur en comonomère de type (méth)acrylate d'alkyle est comprise entre 10 et 25 % en poids de la composition.

3. Composition adhésive selon la revendication 1 ou 2, **caractérisée en ce que** la teneur en fonction(s) réactive(s) est comprise entre 0,05% et 0.9% en poids par rapport à ladite composition.

4. Composition adhésive selon l'une quelconque des revendications 1 à 3, **caractérisée en ce que** le comonomère fonctionnel est choisi parmi les anhydrides d'acides carboxyliques insaturés, et en particulier est l'anhydride maléique.

5. Composition adhésive selon la revendication 4, **caractérisée en ce que** la teneur en anhydride maléique est comprise entre 0.15% et 0.6% en poids de la composition.

6. Structure multicouche obtenue par utilisation de la composition adhésive selon l'une quelconque des revendications 1 à 5, dans un procédé d'extrusion-couchage pour application sur un support, **caractérisée en ce que** ledit support est choisi parmi l'aluminium, le papier ou carton, la cellophane, les films à base de résines polyéthylène, polypropylène, polyamide, polyester, chlorure de polyvinyle (PVC), chlorure de polyvinylidène (PVDC), polyacrylonitryle (PAN), ces films étant orientés ou non, métallisés ou non, traités ou non par voie physique ou chimique, et les films revêtus d'une fine couche barrière inorganique, tels que le polyester (PET SiOx ou AlOx).

7. Structure multicouche obtenue par utilisation de la composition adhésive selon l'une quelconque des revendications 1 à 5, dans un procédé d'extrusion-lamination pour coller entre eux plusieurs supports de nature différente ou non, **caractérisée en ce que** ces supports sont choisis parmi l'aluminium, le papier ou carton, la cellophane, les films à base de résines polyéthylène, polypropylène, polyamide, polyester, chlorure de polyvinyle (PVC), chlorure de polyvinylidène (PVDC), polyacrylonitryle (PAN), ces films étant orientés ou non, métallisés ou non, traités ou non par voie physique ou chimique, et les films revêtus d'une fine couche barrière inorganique, tels que le polyester (PET SiOx ou AlOx).

8. Procédé d'obtention de la composition adhésive selon l'une quelconque des revendications 1 à 5, **caractérisé en ce qu'**il consiste en la polymérisation radicalaire haute pression en une seule étape de tous les comonomères.

9. Procédé d'obtention de la composition adhésive selon l'une quelconque des revendications 1 à 5, **caractérisé en ce que** l'on mélange à l'état fondu au moins deux copolymères éthyléniques obtenus par polymérisation radicalaire haute pression, dont l'un au moins comporte le comonomère fonctionnel.

10. Formulation comprenant une composition adhésive selon l'une quelconque des revendications 1 à 5 et un homopolymère du polyéthylène ou un copolymère du polyéthylène.

11. Formulation selon la revendication 10, **caractérisée en ce que** l'homopolymère du polyéthylène est choisi parmi un polyéthylène basse densité, un polyéthylène linéaire basse densité, un polyéthylène très basse densité et un polyéthylène métallocène.

12. Utilisation de la composition selon l'une quelconque des revendications 1 à 5 ou de la formulation selon la revendication 10 ou 11 dans un procédé d'extrusion-couchage pour application sur un support ou dans un procédé d'extrusion-lamination pour coller entre eux plusieurs supports de nature différente ou non, dans une large gamme de températures.

## Claims

1. An adhesive composition based on at least one ethylene copolymer, this ethylene copolymer being polymers from ethylene and from at least one comonomer, this composition comprising at least one unsaturated carboxylic acid ester type comonomer and at least one functional comonomer, **characterized in that**:
- the at least one unsaturated carboxylic acid ester type comonomer is chosen from alkyl (meth)acrylates, the alkyl group comprising from 1 to 24 carbon atoms,
- the content of alkyl (meth)acrylate type comonomer is between 6 and 25% by weight of the composition, and
- the functional comonomer is composed of at least one reactive function in the form of an acid, anhydride or epoxide group, the level of which is less than 1 % by weight of the composition.

2. The adhesive composition as claimed in claim 1, **characterized in that** the content of alkyl (meth)acrylate type comonomer is between 10 and 25% by weight of the composition.

3. The adhesive composition as claimed in claim 1 or 2, **characterized in that** the content of reactive function(s) is between 0,05% and 0,9% by weight relative to said composition.

4. The adhesive composition as claimed in any one of claims 1 to 3, **characterized in that** the functional comonomer is chosen from unsaturated carboxylic acid anhydrides, and in particular is maleic anhydride.

5. The adhesive composition as claimed in claim 4, **characterized in that** the content of maleic anhydride is between 0,15% and 0,6% by weight of the composition.

6. A multilayer structure obtained by use of the adhesive composition as claimed in any one of claims 1 to 5, in an extrusion-coating process for application onto a support, **characterized in that** said support is chosen from aluminum, paper or board, cellophane, films based on polyethylene, polypropylene, polyamide, polyester, polyvinyl chloride (PVC), polyvinylidene chloride (PVDC) or polyacrylonitrile (PAN) resins, these films being oriented or unoriented, metallized or unmetallized, treated or untreated by physical or chemical means, and films coated with a thin inorganic barrier layer, such as polyester (PET SiOx or AlOx).

7. A multilayer structure obtained by use of the adhesive composition as claimed in any one of claims 1 to 5, in an extrusion-lamination process to bond several supports, having the same or a different nature, together, **characterized in that** these supports are chosen from aluminum, paper or board, cellophane, films based on polyethylene, polypropylene, polyamide, polyester, polyvinyl chloride (PVC), polyvinylidene chloride (PVDC) or polyacrylonitrile (PAN) resins, these films being oriented or unoriented, metallized or unmetallized, treated or untreated by physical or chemical means, and films coated with a thin inorganic barrier layer, such as polyester (PET SiOx or AlOx).

8. A method for producing the adhesive composition as claimed in any one of claims 1 to 5, **characterized in that** it consists of the high-pressure radical polymerization of all the comonomers in a single step.

9. A method for producing the adhesive composition as claimed in any one of claims 1 to 5, **characterized in that** at least two ethylene copolymers obtained by high-pressure radical polymerization, of which one at least comprises the functional comonomer, are melt-blended.

10. Blend comprising the adhesive composition as claimed in any one of claims 1 to 5 and polyethylene homopolymer or copolymer.

11. Blend as claimed in claim 10, **characterized in that** the polyethylene homopolymer is chosen from low-density polyethylene, linear low-density polyethylene, very low-density polyethylene and metallocene polyethylene.

12. Use of the adhesive composition as claimed in any one of claims 1 to 5 or of the blend as claimed in claim 10 or 11 in an extrusion-coating process for application onto a support or in an extrusion-lamination process for bonding several supports, having the same or a different nature, together, over a wide temperature range.

## Patentansprüche

1. Klebstoffzusammensetzung auf Basis eines oder mehrerer Ethylencopolymere, wobei es sich bei den Ethylencopolymeren um Polymere von Ethylen und einem oder mehreren Comonomeren handelt, wobei diese Zusammensetzung mindestens ein Comonomer vom Typ Ester ungesättigter Carbonsäuren und mindestens ein funktionelles Comonomer umfaßt, **dadurch gekennzeichnet, daß**:
- mindestens ein Comonomer vom Typ Ester ungesättigter Carbonsäuren unter Alkyl(meth)-acrylaten mit 1 bis 24 Kohlenstoffatomen in der Alkylgruppe ausgewählt ist,
- der Gehalt an Comonomer vom Typ Alkyl(meth)-acrylat zwischen 6 und 25 Gew.-%, bezogen auf die Zusammensetzung, liegt und
- das funktionelle Comonomer aus mindestens einer reaktiven Funktion in Form einer Säure-, Anhydrid- oder Epoxidgruppe mit einem Gehalt von weniger als 1 Gew.-%, bezogen auf die Zusammensetzung, besteht.

2. Klebstoffzusammensetzung nach Anspruch 1, **dadurch gekennzeichnet, daß** der Gehalt an Comonomer vom Typ Alkyl(meth)acrylat zwischen 10 und 25 Gew.-%, bezogen auf die Zusammensetzung, liegt.

3. Klebstoffzusammensetzung nach Anspruch 1 oder 2, **dadurch gekennzeichnet, daß** der Gehalt an reaktiver Funktion bzw. reaktiven Funktionen zwischen 0,05 und 0,9 Gew.-%, bezogen auf die Zusammensetzung, liegt.

4. Klebstoffzusammensetzung nach einem der Ansprüche 1 bis 3, **dadurch gekennzeichnet, daß** das funktionelle Comonomer unter Anhydriden ungesättigter Carbonsäuren ausgewählt ist und insbesondere Maleinsäureanhydrid ist.

5. Klebstoffzusammensetzung nach Anspruch 4, **dadurch gekennzeichnet, daß** der Gehalt an Maleinsäureanhydrid zwischen 0,15 und 0,6 Gew.-%, bezogen auf die Zusammensetzung, liegt.

6. Mehrschichtstruktur, erhalten durch Verwendung der Klebstoffzusammensetzung nach einem der Ansprüche 1 bis 5 in einem Extrusionsbeschichtungsverfahren zum Aufbringen auf einen Träger, **dadurch gekennzeichnet, daß** der Träger unter Aluminium, Papier oder Karton, Cellophan, Folien auf Basis von Polyethylenharzen, Polypropylenharzen, Polyamidharzen, Polyesterharzen, Polyvinylchloridharzen (PVC-Harzen), Polyvinylidenchloridharzen (PVDC-Harzen) und Polyacrylnitrilharzen (PAN-Harzen), wobei diese Folien gegebenenfalls orientiert, gegebenenfalls metallisiert und gegebenenfalls physikalisch oder chemisch behandelt sind, und Folien, die mit einer dünnen anorganischen Barriereschicht überzogen sind, wie Polyester (PET SiOx oder AlOx), ausgewählt ist.

7. Mehrschichtstruktur, erhalten durch Verwendung der Klebstoffzusammensetzung nach einem der Ansprüche 1 bis 5 in einem Extrusionslaminationsverfahren zum Verkleben mehrerer Träger gleicher oder verschiedener Natur miteinander, **dadurch gekennzeichnet, daß** die Träger unter Aluminium, Papier oder Karton, Cellophan, Folien auf Basis von Polyethylenharzen, Polypropylenharzen, Polyamidharzen, Polyesterharzen, Polyvinylchloridharzen (PVC-Harzen), Polyvinylidenchloridharzen (PVDC-Harzen) und Polyacrylnitrilharzen (PAN-Harzen), wobei diese Folien gegebenenfalls orientiert, gegebenenfalls metallisiert und gegebenenfalls physikalisch oder chemisch behandelt sind, und Folien, die mit einer dünnen anorganischen Barriereschicht überzogen sind, wie Polyester (PET SiOx oder AlOx), ausgewählt sind.

8. Verfahren zum Erhalt der Klebstoffzusammensetzung nach einem der Ansprüche 1 bis 5, **dadurch gekennzeichnet, daß** es aus der Hochdruck-Radikalpolymerisation aller Comonomere in einem einzigen Schritt besteht.

9. Verfahren zum Erhalt der Klebstoffzusammensetzung nach einem der Ansprüche 1 bis 5, **dadurch gekennzeichnet, daß** man mindestens zwei durch Hochdruck-Radikalpolymerisation erhaltene Ethylencopolymere, von denen mindestens eines das funktionelle Comonomer enthält, in der Schmelze vermischt.

10. Formulierung, umfassend eine Klebstoffzusammensetzung nach einem der Ansprüche 1 bis 5 und ein Polyethylen-Homopolymer oder ein Polyethylen-Copolymer.

11. Formulierung nach Anspruch 10, **dadurch gekennzeichnet, daß** das Polyethylen-Homopolymer unter einem Polyethylen niederer Dichte, einem linearen Polyethylen niederer Dichte, einem Polyethylen sehr niedriger Dichte und einem Metallocen-Polyethylen ausgewählt ist.

12. Verwendung der Zusammensetzung nach einem der Ansprüche 1 bis 5 oder der Formulierung nach Anspruch 10 oder 11 in einem Extrusionsbeschichtungsverfahren zum Aufbringen auf einen Träger oder einem Extrusionslaminationsverfahren zum Verkleben mehrerer Träger gleicher oder verschiedener Natur miteinander über einen großen Temperaturbereich.
